# EUROPÄISCHE PATENTANMELDUNG

(11) **EP 4 421 259 A1**
(43) Veröffentlichungstag der Anmeldung: **28.08.2024**
(21) Anmeldenummer: 24152550.0
(22) Anmeldetag: 18.01.2024
(51) Int. Cl.: E04B 2/96, E06B 3/54, F24S 20/66, H02S 20/26

(54) **FASSADEN- ODER FENSTERPANEEL UND FASSADE ODER FENSTER MIT EINEM DERARTIGEN PANEEL**

(30) Priorität: 22.02.2023 DE 102023104366
(71) Anmelder: Raico Bautechnik GmbH, 87772 Pfaffenhausen (DE)
(72) Erfinder: Kaufmann, Michael, 87600 Kaufbeuren (DE); Ruf, Alexander, 88459 Tannheim (DE); Raffler, Christoph, 87745 Eppishausen (DE)
(74) Vertreter: Charrier Rapp & Liebau

(57) **Zusammenfassung**

Die Erfindung betrifft ein Fassaden- oder Fensterpaneel (2) zur Befestigung an einer Tragkonstruktion einer Pfosten-Riegel-Fassade oder eines Fensters, mit einem inneren Dämmelement (15) und einem äußeren Deckelement (14). Um eine einfache und optisch ansprechende Belüftung zu ermöglichen, ist zwischen dem inneren Dämmelement (15) und dem äußeren Deckelement (14) ein über Belüftungsöffnungen (24) und/oder Durchlässe (33) hinterlüfteter Hohlraum (16) angeordnet.

## Beschreibung

Die Erfindung betrifft ein Fassaden- oder Fensterpaneel zur Befestigung an einer Tragkonstruktion einer Fassade oder eines Fensters. Die Erfindung betrifft außerdem eine Fassade oder ein Fenster mit einem derartigen Paneel.

Paneele werden als Füllelemente an Pfosten-Riegel-Fassaden oder Fenstern eingesetzt. Sie weisen üblicherweise ein je nach Bedarf frei gestaltbares äußeres Deckelement und ein inneres Dämmelement auf. Vielfach werden derartige Paneele jedoch nicht nur als reine Abdeckungen eingesetzt, sondern sollen zusätzliche Funktionen erfüllen. Für einige der gewünschten Zusatzfunktionen oder Anwendungsfälle ist jedoch eine Belüftung oder Hinterlüftung erforderlich. Hierfür werden bestimmte Durchdringungen in den Paneelen benötigt. Diese können jedoch das Aussehen der Fassade beinträchtigen.

Aufgabe der Erfindung ist es, ein Fassaden- oder Fensterpaneel und eine Fassade oder ein Fenster mit einem derartigen Paneel zu schaffen, die eine einfache und optisch ansprechende Belüftung ermöglichen.

Diese Aufgabe wird durch ein Fassaden- oder Fensterpaneel mit den Merkmalen des Anspruchs 1 und durch eine Fassade oder ein Fenster mit den Merkmalen des Anspruchs 13. gelöst. Zweckmäßige Ausgestaltungen und vorteilhafte Weiterbildungen der Erfindung sind in den Unteransprüchen angegeben.

Das erfindungsgemäße Fassaden- oder Fensterpaneel weist zwischen einem inneren Dämmelement und einem äußeren Deckelement einen über Belüftungsöffnungen und/oder Durchlässe hinterlüfteten Hohlraum auf. Bei dem z.B. als Lüftungspaneel für eine dezentrale Belüftung und/oder als Solarmodulpaneel einsetzbaren Fassaden- oder Fensterpaneel kann über den hinterlüfteten Hohlraum zwischen dem inneren Dämmelement und dem als Abdeckung oder Solarmodul ausgeführten äußeren Deckelement eine Verbindung zwischen einem an der Innenseite des Fassaden- oder Fensterpaneels angeordneten Lüftungs- und Klimagerät und der Außenseite für die Zufuhr von Frischluft bzw. den Luftaustausch erreicht werden. So können einzelne Gebäudeteile dezentral belüftet und/oder ein an der Außenseite des Fassaden- oder Fensterpaneels angeordnetes Solarmodul hinterlüftet werden. Durch die Hinterlüftung kann der Wirkungsgrad der Solarmodule deutlich verbessert werden.

In einer zweckmäßigen Ausgestaltung ist das äußere Deckelement über randseitige Halterungen von dem inneren Dämmelement beabstandet gehalten. Dadurch ergibt sich zwischen dem äußeren Deckelement und dem inneren Dämmelement der für die Belüftung dienende Hohlraum. Die Belüftung des Hohlraums kann über Belüftungsöffnungen in den randseitigen Halterungen und/oder über Durchlässe zwischen den voneinander beabstandeten Halterungen erfolgen. Die die Belüftungsöffnungen oder Durchlässe können aber auch in dem Deckelement angeordnet sein. Die Halterungen können vollständig um das Paneel umlaufen oder als längere Halterungen mit entsprechenden Belüftungsöffnungen ausgeführt sein. Die Halterungen können aber auch als Kurzhalterungen ausgebildet sein, zwischen denen Durchlässe für die Belüftung des Hohlraums gebildet sind.

Die Belüftungsöffnungen können in einer besonders zweckmäßigen Ausgestaltung in rechtwinklig zu einer Außenfläche des Deckelements angeordneten Seitenteilen des Deckelements oder in rechtwinklig zu einer Außenfläche des Deckelements angeordneten Schenkeln der randseitigen Halterungen angeordnet sein. Dadurch sind die Belüftungsöffnungen von der Außenseite des Fassaden- oder Fensterpaneels nicht erkennbar.

In einer weiteren vorteilhaften Ausführung weist das innere Dämmelement einen von der Innenseite des Paneels zum Hohlraum führenden Durchgang für den Anschluss eines dezentralen Klimageräts auf.

Für ein reines Lüftungspaneel kann das Deckelement als einfache Abdeckplatte aus Metall, Kunststoff, Glas oder einem anderen geeigneten Material ausgeführt sein. Das Deckelement kann aber auch als plattenförmiges Photovoltaikmodul ausgebildet sein.

Das Fassaden- oder Fensterpaneel kann entweder direkt oder über ein randseitiges Halteprofil an einem Tragelement einer Fassade oder eines Fensters befestigbar sein. Das Halteprofil kann als gesondertes Bauteil oder als integraler Bestandteil des Dämmelements ausgeführt sein. Das Halteprofil kann zweckmäßigerweise als Verbundbauteil mit einem Innenprofil und einem mit diesem über Isolierstege verbundenen Außenprofil ausgebildet sein.

Das innere Dämmelement enthält zweckmäßigerweise ein Dämmmaterial, das auf einer inneren Abdeckung oder zwischen einer inneren und einer äußeren Abdeckung angeordnet sein kann. Die innere und äußere Abdeckung des Dämmelements können z.B. aus Blech oder einer stabilen Folie bestehen.

Die Erfindung betrifft außerdem eine Fassade oder ein Fenster, bei denen an Trageelementen die vorstehend beschriebenen Fassaden- oder Fensterpaneele angeordnet sind.

Das Deckelement des Fassaden- oder Fensterpaneels oder deren Halterungen sind zweckmäßigerweise derart ausgebildet, dass die Außenfläche des Deckelelements mit der Außenfläche der an dem Tragelementen weiter angeordneten Fassadenelemente fluchtet. Dadurch kann eine möglichst einheitliche äußere Fassadengestaltung erreicht werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Schnittansicht einer Pfosten-Riegel-Fassade mit einem als Lüftungspaneel ausgeführten Fassadenpaneel;
- **Figur 2**: eine Schnittansicht einer Pfosten-Riegel-Fassade mit einem als Solarmodulpaneel ausgeführten Fassadenpaneel;
- **Figur 3**: ein zweites Ausführungsbeispiel eines als Solarmodulpaneel ausgeführten Fassadenpaneels;
- **Figur 4**: ein drittes Ausführungsbeispiel eines als Solarmodulpaneel ausgeführten Fassadenpaneels;
- **Figur 5**: ein viertes Ausführungsbeispiel eines als Solarmodulpaneel ausgeführten Fassadenpaneels;
- **Figur 6**: ein fünftes Ausführungsbeispiel eines als Solarmodulpaneel ausgeführten Fassadenpaneels;
- **Figur 7**: ein sechstes Ausführungsbeispiel eines als Solarmodulpaneel ausgeführten Fassadenpaneels;
- **Figur 8**: ein als Lüftungs- und Solarmodulpaneel ausgeführtes Fassadenpaneel und
- **Figur 9**: eine Fensterkonstruktion mit einem Fensterpaneel.

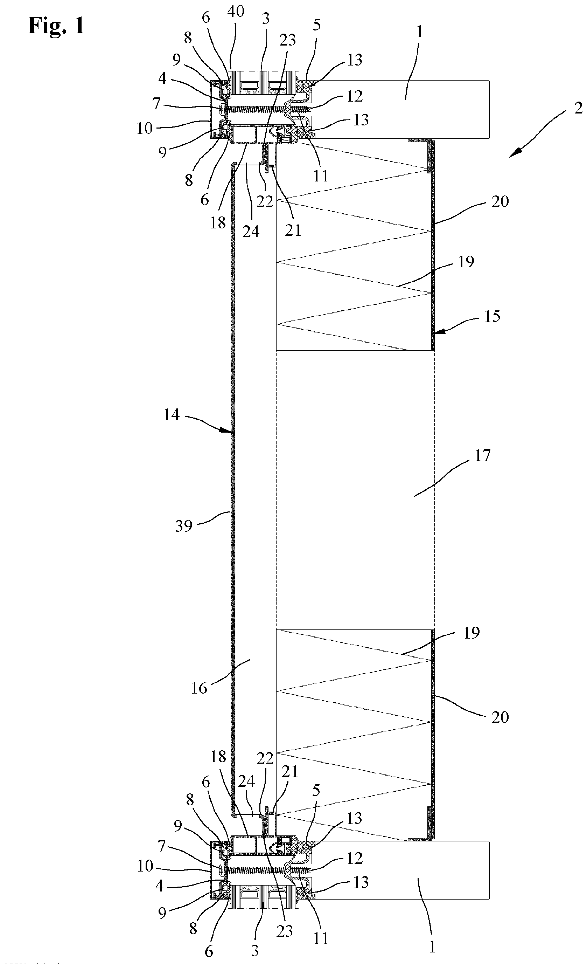

In Figur 1 ist eine Schnittansicht einer als Pfosten-Riegel-Konstruktion ausgebildeten Fassade mit zwei als Pfostenprofilen ausgebildeten Tragelementen 1 und einem zwischen den Tragelementen 1 angeordneten Fassadenpaneel 2 gezeigt. Die hier als vertikale Pfostenprofile ausgebildeten Tragelemente 1 bilden zusammen mit nicht gezeigten horizontalen Riegelprofilen eine in Pfosten-Riegel-Bauweise ausgeführte Tragkonstruktion, an der neben dem Paneel 2 auch z.B. als Isolierglasscheiben ausgebildete Fassadenelemente 3 durch Andruckelemente 4 über eine Innendichtung 5 und Außendichtungen 6 abgedichtet befestigbar sind. Die Andruckelemente 4 sind in der gezeigten Ausführung als Pressleisten ausgeführt und werden über Befestigungsschrauben 7 an dem Tragprofil 1 befestigt.

Die als Pressleisten ausgeführten Andruckelemente 4 weisen an ihrer den Tragprofilen 1 zugewandten Breitseite zwei als Aufnahmekanäle ausgeführte Aufnahmen 8 für die beiden leistenförmigen Außendichtungen 6 auf. Die als Profildichtungen ausgebildeten Außendichtungen 6 sind über Dichtungsfüße 9 in den Aufnahmen 8 gehalten. Auf dem Andruckelement 4 ist eine Abdeckung 10 mittels einer Clipverbindung lösbar aufgesetzt.

Das als Pfosten- und Riegelprofil einsetzbare Tragelement weist an seiner äußeren Stirnseite einen nach außen vorstehenden Befestigungssteg 11 mit einem Befestigungskanal 12 für die Befestigungsschrauben 7 auf. An der äußeren Stirnseite des Tragelements 1 sind an den beiden Rändern außerdem zwei nach außen vorstehende Rippen 13 zur Halterung der als Hutdichtung ausgebildeten Innendichtung 5 angeformt. Das Tragelement 1 kann aus Metall, Kunststoff oder Holz bestehen und kann z.B. als Profilträger ausgeführt sein.

Das zwischen den beiden Tragelementen 1 angeordnete Fassadenpaneel 2 ist bei der in Figur 1 gezeigten Ausführung als fassadenintegriertes Lüftungspaneel zum Anschluss eines dezentralen Klimageräts konzipiert. Es weist ein äußeres Deckelement 14, ein inneres Dämmelement 15 und einen hinterlüfteten Hohlraum 16 zwischen dem äußeren Deckelement 14 und dem inneren Dämmelement 15 auf. In dem Dämmelement 15 ist ein von der Innenseite des Paneels 2 zum Hohlraum 16 führender Durchgang 17 für den Anschluss eines dezentralen Klimageräts vorgesehen. Dadurch kann innerhalb eines Gebäudes eine dezentrale Klimatisierung und Lüftung mit einer individuellen und flexibleren Steuerung bei geringem Installationsaufwand erreicht werden. Eine dezentrale Lüftung und Klimatisierung kann somit auch ohne zusätzliche äußere Abdeckungen auf optisch möglichst unauffällige Weise in eine Gebäudefassade integriert werden.

Das in Figur 1 gezeigte Fassadenpaneel 2 wird über randseitige Halteprofile 18 an den Tragelementen 1 durch die Andruckelemente 4 über die Innendichtung 5 und eine Außendichtung 6 abgedichtet gehalten. Die Abmessungen der vorzugsweise aus Kunststoff bestehenden Halteprofile 18 sind an die Dicke der hier als Isolierglasscheiben ausgeführten Fassadenelemente 3 angepasst. Bei der gezeigten Ausführung besteht das Dämmelement 15 aus einem Dämmmaterial 19, das auf einer hier als Blechplatte ausgeführten inneren Abdeckung 20 angeordnet ist. Die Halteprofile 14 weisen einen nach innen vorstehenden Haltesteg 21 auf, an dessen Innenseite das Dämmelement 15 mit seiner Außenseite anliegt. An der Außenseite der beiden Haltestege 21 ist das äußere Deckelement 14 befestigt.

Das äußere Deckelement 14 ist bei dem gezeigten Ausführungsbeispiel als Blechabdeckung mit einem L-förmig abgekanteten Randbereich ausgeführt. Der L-förmig abgekantete Randbereich des z.B. aus einem Metallblech bestehenden Deckelements 14 weist einen zur Außenfläche des Deckelelements rechtwinkligen Seitenteil 22 und einen dazu rechtwinkligen Halteteil 23 auf. Über den Halteteil 23 ist das Deckelement 14 auf den Haltestegen 21 der Halteprofile 14 befestigt. In den Seitenteilen 22 sind hier als Langlöcher ausgeführte Belüftungsöffnungen 24 für die Belüftung des Hohlraums 16 vorgesehen. Über den L-förmig abgewinkelten Randbereich des Deckelements 14 wird eine Schattenfuge geschaffen, an deren seitlichen Innenbereich die Belüftungsöffnungen 24 von der Außenseite her nicht sichtbar angeordnet sind. Der Randbereich des Deckelements 14 ist derart ausgestaltet, dass die Außenfläche des Deckelements 14 mit den Außenflächen der hier als Isolierglasscheiben ausgebildeten Fassadenelemente 3 fluchtet. Dadurch kann eine einheitliche Fassadengestaltung erreicht werden.

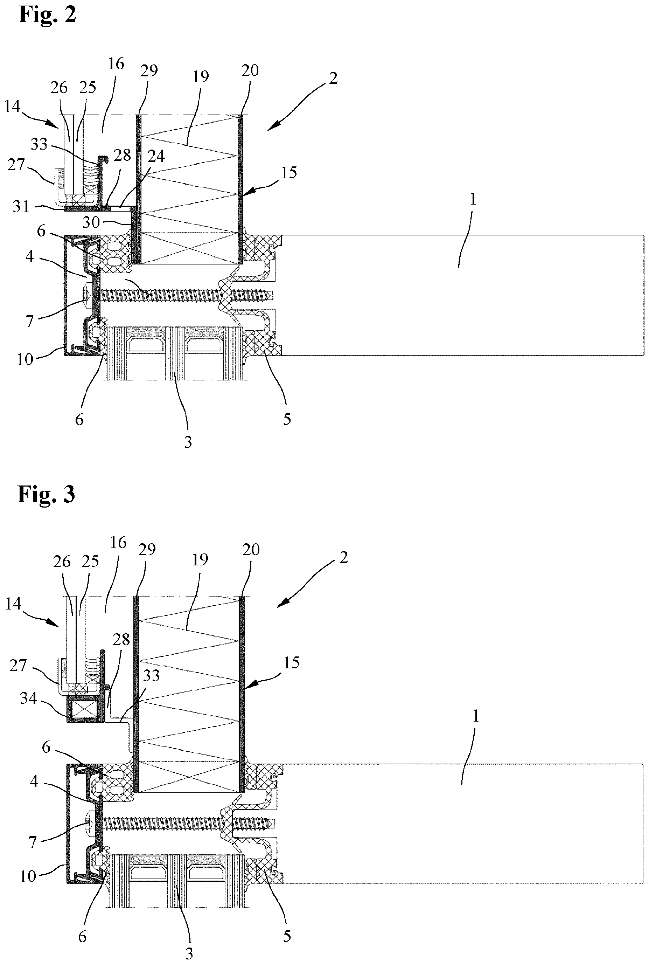

In den Figuren 2 bis 4 sind weitere Ausführungsbeispiele für Fassadenpaneele 2 gezeigt. Im Unterschied zum Ausführungsbeispiel von Figur 1 sind hier die Paneele nicht als Lüftungspaneele für dezentrale Klima- oder Lüftungsgeräte, sondern als Paneele mit integriertem Photovoltaikmodul ausgeführt. Die gezeigten Fassadenpaneele 2 weisen aber ebenfalls ein äußeres Deckelement 14, ein inneres Dämmelement 15 und einen hinterlüfteten Hohlraum 16 zwischen dem äußeren Deckelement 14 und dem inneren Dämmelement 15 auf. Wie bei dem Ausführungsbeispiel von Figur 1 ist das Fassadenpaneel 2 an dem Tragelement 1 durch das leistenförmige Andruckelement 4 über eine Innendichtung 5 und Außendichtungen 6 abgedichtet befestigt. Einander entsprechende Bauteile sind daher auch mit denselben Bezugszeichen versehen.

Das äußere Deckelement 14 ist bei den Ausführungen der Figuren 2 bis 4 als Photovoltaikmodul mit einer inneren Trägerplatte 25 und einer z.B. aus Glas bestehenden äußeren Abdeckplatte 26 ausgeführt. Das als Photovoltaikmodul ausgeführte Deckelement 14 wird über eine randseitige Einfassung 27 und winkelförmige Halterungen 28 von dem Dämmelement 15 beabstandet gehalten, so dass sich zwischen dem zwischen dem äußeren Deckelement 14 und dem inneren Dämmelement 15 der Hohlraum 16 ergibt. Das Dämmelement 15 ist bei diesen Ausführungen aus einem zwischen zwei blechförmigen inneren und äußeren Abdeckungen 20 bzw. 29 angeordneten Dämmstoff 19 ausgeführt.

Bei dem Ausführungsbeispiel von Figur 2 weist die winkelförmige Halterung 28 einen an der äußeren Abdeckung 29 am Dämmelement 15 anliegenden ersten Schenkel 30 und einen dazu rechtwinkligen zweiten Schenkel 31 auf. In dem zur Außenseite hin vorstehenden zweiten Schenkel 31 der winkelförmigen Halterung 28 sind Belüftungsöffnungen 24 für die Belüftung des Hohlraums 16 angeordnet. An dem zweiten Schenkel 31 ist außerdem ein dazu rechtwinkliger Steg 33 zur Halterung der Einfassung 27 angeformt. Die Halterung 28 ist mit ihrem ersten Schenkel 30 zwischen der äußeren Abdeckung 29 am Dämmelement 15 und der äußeren Dichtung 6 am Andruckelement 4 eingespannt.

Bei der in Figur 3 gezeigten Ausführung ist das Dämmelement 15 mit den beiden inneren und äußeren Abdeckungen 19 bzw. 29 zwischen der inneren Dichtung 5 und der äußeren Dichtung 6 eingespannt. Die Befestigung des als Photovoltaikmodul ausgeführten Deckelements 14 erfolgt bei dieser Ausführung über mehrere voneinander beabstandete winkelförmige kurze Halterungen 27, zwischen denen Durchlässe 33 für die Belüftung des Hohlraums 16 gebildet wird. Die als Kurzprofile ausgeführten winkelförmigen Halterungen 27 sind an der äußeren Abdeckung 29 befestigt. Zwischen den winkelförmigen Halterungen 27 und der Einfassung 26 des als Photovoltaikmodul ausgeführten Deckelements 14 sind z.B. aus Aluminium bestehende Verbindungsprofile 34 vorgesehen.

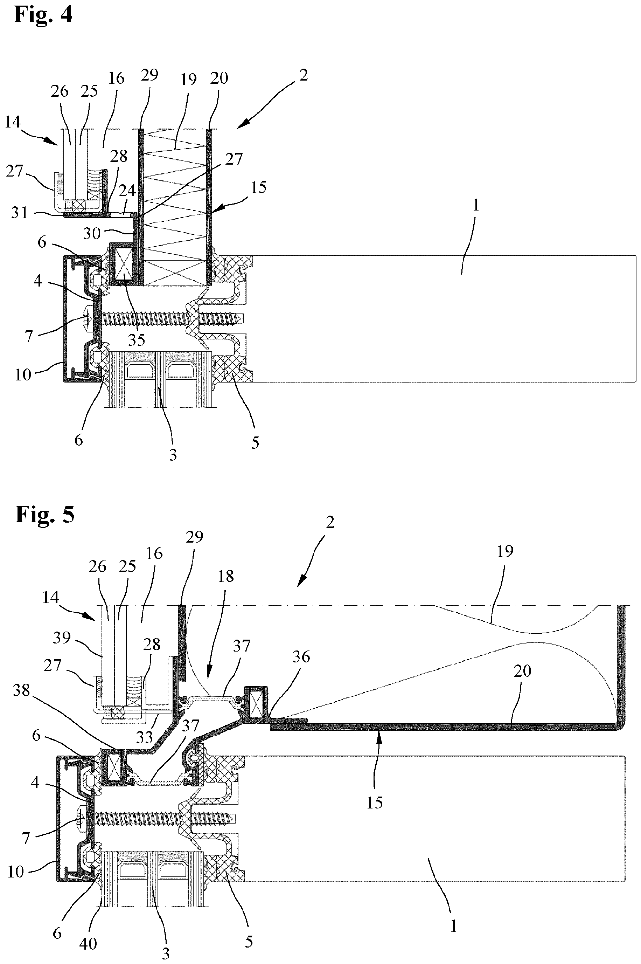

Das in Figur 4 gezeigte weitere Ausführungsbeispiel entspricht im Wesentlichen der Ausführung von Figur 2. Anstelle der bei Figur 2 verbreiterten Außendichtung 6 an dem Fassadenpaneel 2 ist bei dieser Ausführung an dem ersten Schenkel 30 der winkelförmigen Halterungen 27 ein Erhöhungsteil 35 zum Höhenausgleich vorgesehen. Die beiden Außendichtungen 6 können somit identisch ausgeführt sein.

In den Figuren 5 bis 7 sind weitere Ausführungsbeispiele eines Fassadenpaneels 2 mit integriertem Photovoltaikmodul gezeigt. Bei diesen Ausführungsbeispielen ist das randseitige Halteprofil 18 zur Einspannung des Fassadenpaneels 2 an einer Pfosten-Riegel-Fassade als Verbundprofil mit einem Innenprofil 36 und einem mit diesem über Isolierstege 37 verbundenen Außenprofil 38 ausgeführt. An dem Innenprofil 36 ist die hier aus einem abgewinkelten Blech bestehende innere Abdeckung 20 befestigt. An dem Außenprofil 38 ist die hier als Blechplatte ausgeführte äußere Abdeckung 29 befestigt. Innerhalb des durch die innere Abdeckung 20 und die äußere Abdeckung begrenzten Innenraums ist das Dämmmaterial 19 angeordnet.

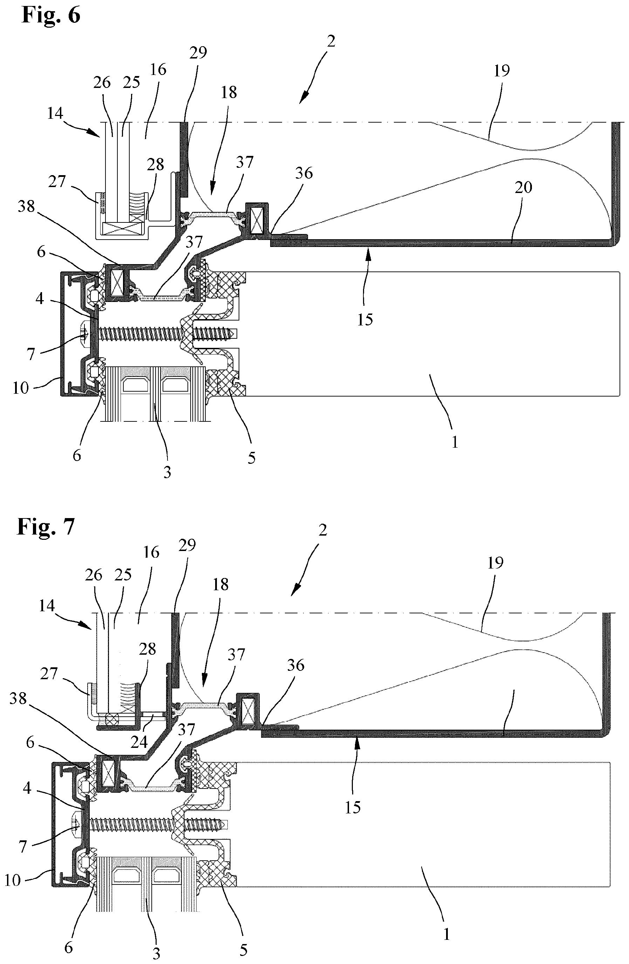

Bei den in Figur 5 und Figur 6 gezeigten Ausführungen sind die Halterungen 28 zur Halterung des als Solarmodul ausgebildeten Deckelements 14 als gesonderte winkelförmige Bauteile ausgeführt. Die Halterungen 28 sind voneinander beabstandet, sodass sich zwischen den Halterungen 28 entsprechende Durchlässe für die Belüftung des zwischen dem inneren Dämmelement 14 und dem äußeren Deckelement 15 angeordneten Hohlraums 16 ergeben. Bei der in Figur 7 dargestellten Ausführung ist die Halterung 28 als Teil des Innenprofils 36 ausgeführt und an diesem angeformt. Wie bei der Ausführung von Figur 4 sind auch hier in der Halterung entsprechende Belüftungsöffnungen 32 vorgesehen.

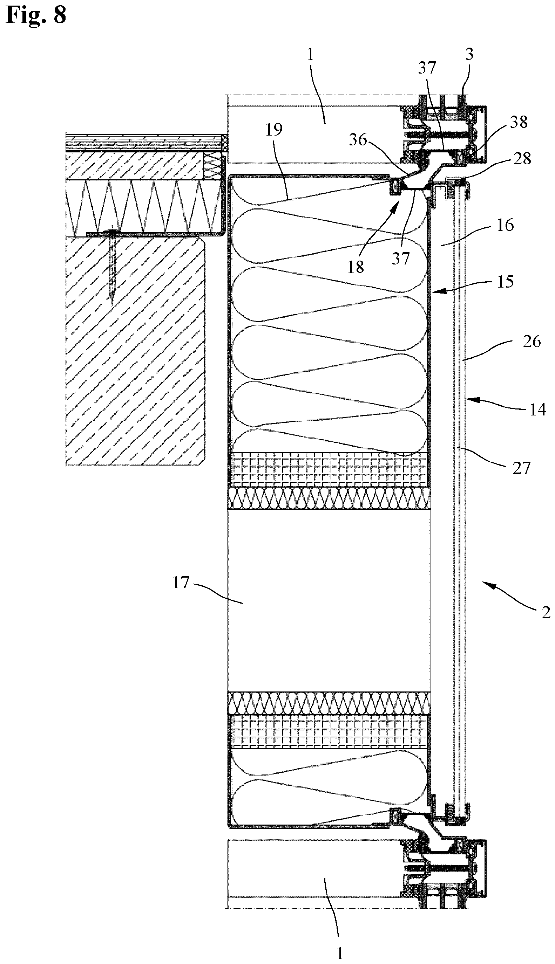

In Figur 8 ist ein kombiniertes Lüftungs- und Solarmodul-Paneel am Beispiel eines Bauanschlusses gezeigt. Das hier dargestellte Fassadenpaneel 2 weist neben einem als Solarmodul ausgebildeten Deckelement 14 auch einem im Dämmelement 15 angeordneten Durchgang für den Anschluss eines dezentralen Lüftungs- oder Klimageräts auf. Dadurch kann eine Luftzufuhr nach Innen und gleichzeitig eine zusätzliche Funktion als Solarmodul erreicht werden. Das zwischen zwei Tragelementen 1 eingespannte Fassadenpaneel 2 weist einen auch in Figur 5 gezeigten Aufbau auf.

Wie aus den Figuren 1 und 5 hervorgeht, sind die Deckelemente 14 oder die Halterungen 28 für die Deckelemente 14 bei den dort gezeigten Ausführungen derart ausgebildet, dass die Außenfläche 39 des Deckelelements 14 mit der Außenflächen 40 der an dem Tragelementen 1 weiter angeordneten Fassadenelemente 2 fluchtet. Dadurch kann eine möglichst einheitliche äußere Fassadengestaltung erreicht werden.

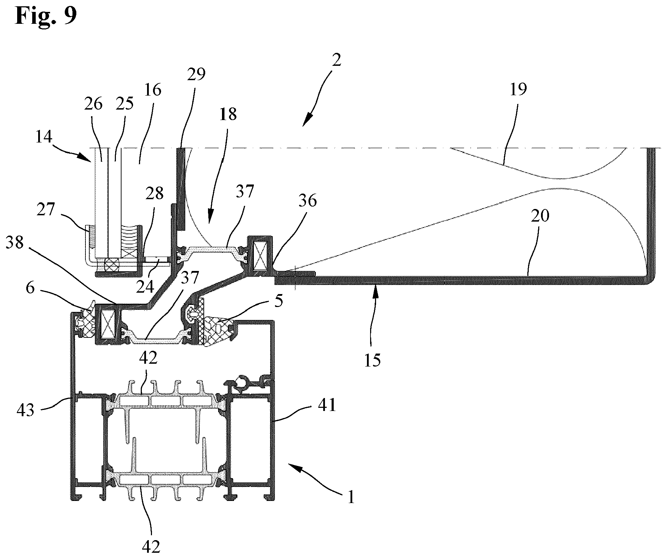

Die vorstehend beschriebenen Fassadenpaneele 2 können nicht nur in Fassaden, sondern auch in Fensterkonstruktionen integriert werden. Figur 9 zeigt ein Fensterpaneel 2, das in ein als Fensterprofil ausgeführtes Tragelement 1 eingesetzt ist. Das Fensterpaneel 2 weist einen in Figur 7 gezeigten Aufbau auf. Das als Verbundprofil ausgeführte Tragelement 1 besteht aus einem inneren Fensterprofil 41 und einem über Isolierstege 42 mit diesem verbunden äußeren Fensterprofil 43. Zwischen dem inneren Fensterprofil 41 und dem äußeren Fensterprofil 43 ist das gezeigte Fensterpaneel 2 über eine Innendichtung 5 und eine Außendichtung 6 abgedichtet eingespannt.

### Bezugszeichenliste

- 1: Tragelement
- 2: Fassaden- oder Fensterpaneel
- 3: Fassadenelement
- 4: Andruckelement
- 5: Innendichtung
- 6: Außendichtung
- 7: Befestigungsschraube
- 8: Aufnahme
- 9: Dichtungsfuß
- 10: Abdeckung
- 11: Befestigungssteg
- 12: Befestigungskanal
- 13: Rippen
- 14: Äußeres Deckelement
- 15: Inneres Dämmelement
- 16: Hinterlüfteter Hohlraum
- 17: Durchgang
- 18: Halteprofil
- 19: Dämmmaterial
- 20: Innere Abdeckung
- 21: Haltesteg
- 22: Seitenteil
- 23: Halteteil
- 24: Belüftungsöffnung
- 25: Trägerplatte
- 26: Abdeckplatte
- 27: Einfassung
- 28: Halterung
- 29: Äußere Abdeckung
- 30: Erster Schenkel
- 31: Zweiter Schenkel
- 32: Steg
- 33: Durchlass
- 34: Verbindungsprofil
- 35: Erhöhungsteil
- 36: Innenprofil
- 37: Isoliersteg
- 38: Außenprofil
- 39: Außenfläche des Deckelements
- 40: Außenfläche des Fassadenelements
- 41: Inneres Fensterprofil
- 42: Isoliersteg
- 43: Äußeres Fensterprofil

## Patentansprüche

1. Fassaden- oder Fensterpaneel (2) zur Befestigung an einer Tragkonstruktion einer Pfosten-Riegel-Fassade oder eines Fensters, mit einem inneren Dämmelement (15) und einem äußeren Deckelement (14), **dadurch gekennzeichnet, dass** zwischen dem inneren Dämmelement (15) und dem äußeren Deckelement (14) ein über Belüftungsöffnungen (24) und/oder Durchlässe (33) hinterlüfteter Hohlraum (16) angeordnet ist.

2. Fassaden- oder Fensterpaneel (2) nach Anspruch 1, **dadurch gekennzeichnet, dass** das äußere Deckelement (14) über randseitige Halterungen (28) von dem inneren Dämmelement (15) beabstandet gehalten ist.

3. Fassaden- oder Fensterpaneel (2) nach Anspruch 2, **dadurch gekennzeichnet, dass** die Belüftungsöffnungen (24) in den randseitigen Halterungen (28) angeordnet sind.

4. Fassaden- oder Fensterpaneel (2) nach Anspruch 2 oder 3, **dadurch gekennzeichnet, dass** die Durchlässe (33) zwischen den voneinander beabstandeten Halterungen (28) angeordnet sind.

5. Fassaden- oder Fensterpaneel (2) nach einem der Ansprüche 1 bis 4, **dadurch gekennzeichnet, dass** die Belüftungsöffnungen (24) und/oder Durchlässe (33) in dem Deckelement (14) angeordnet sind.

6. Fassaden- oder Fensterpaneel (2) nach Anspruch 1 oder 2, **dadurch gekennzeichnet, dass** die Belüftungsöffnungen (24) in rechtwinklig zu einer Außenfläche des Deckelements (14) angeordneten Seitenteilen (22) des Deckelements (14) oder in rechtwinklig zu einer Außenfläche des Deckelements (14) angeordneten Schenkeln (31) der randseitigen Halterungen (28) angeordnet sind.

7. Fassaden- oder Fensterpaneel (2) nach einem der Ansprüche 1 bis 6, **dadurch gekennzeichnet, dass** das innere Dämmelement (15) einen von der Innenseite des Fassaden- oder Fensterpaneels (2) zum Hohlraum (16) führenden Durchgang (17) für den Anschluss eines dezentralen Klimageräts enthält.

8. Fassaden- oder Fensterpaneel (2) nach einem der Ansprüche 1 bis 7, **dadurch gekennzeichnet, dass** das Deckelement (14) als Abdeckplatte ausgebildet ist.

9. Fassaden- oder Fensterpaneel (2) nach einem der Ansprüche 1 bis 7, **dadurch gekennzeichnet, dass** das Deckelement (14) als plattenförmiges Photovoltaikmodul (25, 26) ausgebildet ist.

10. Fassaden- oder Fensterpaneel (2) nach einem der Ansprüche 1 bis 9, **dadurch gekennzeichnet, dass** an dem Dämmelement (15) ein randseitiges Halteprofil (18) zur Befestigung an einem Tragelement (1) angeordnet ist.

11. Fassaden- oder Fensterpaneel (2) nach Anspruch 10, **dadurch gekennzeichnet, dass** das Halteprofil (18) als Verbundprofil mit einem Innenprofil (36) und einem mit diesem über Isolierstege (37) verbundenen Außenprofil (38) ausgebildet ist.

12. Fassaden- oder Fensterpaneel (2) nach einem der Ansprüche 1 bis 11, **dadurch gekennzeichnet, dass** das innere Dämmelement (15) ein Dämmmaterial (19) enthält, welches auf einer inneren Abdeckung (19) oder zwischen einer inneren und einer äußeren Abdeckung (19, 29) angeordnet ist.

13. Fassade- oder Fenster mit mindestens einem an Tragelementen (1) angeordneten Fassaden- oder Fensterpaneel (2), **dadurch gekennzeichnet, dass** das Fassaden-oder Fensterpaneel (2) nach einem der Ansprüche 1 bis 12 ausgebildet ist.

14. Fassade- oder Fenster nach Anspruch 13, **dadurch gekennzeichnet, dass** das Deckelement (14) des Fassaden- oder Fensterpaneels (2) oder deren Halterungen (28) derart ausgebildet sind, dass die Außenfläche (39) des Deckelelements (14) mit der Außenfläche (40) der an dem Tragelementen (1) weiter angeordneten Fassadenelemente (2) fluchtet.
